Europäisches Patentamt

European Patent Office

Office européen des brevets

(11) Publication number: **0 610 956 A2**

# EUROPEAN PATENT APPLICATION

(21) Application number: **94102232.9**

(22) Date of filing: **14.02.94**

(51) Int. Cl.5: **G01N 21/90**, G06F 15/70

(30) Priority: **12.02.93 JP 23090/93**

(43) Date of publication of application:
**17.08.94 Bulletin 94/33**

(84) Designated Contracting States:
**DE FR GB**

(71) Applicant: **FUJI ELECTRIC CO., LTD.**
**1-1, Tanabeshinden**
**Kawasaki-ku**
**Kawasaki-shi Kanagawa 210 (JP)**

(72) Inventor: **Toyama,Kouichi,c/o Fuji Electric**
**Co.Ltd.**
**1-1,Tanabeshinden,Kawasaki-ku**
**Kawasaki-shi, Kanagawa 210 (JP)**
Inventor: **Yamamura,Tatsuo,c/o Fuji Electric**
**Co.Ltd.**
**1-1,Tanabeshinden,Kawasaki-ku**
**Kawasaki-shi, Kanagawa 210 (JP)**

(74) Representative: **DIEHL GLAESER HILTL &**
**PARTNER**
**Patentanwälte**
**Königstrasse 28**
**D-22767 Hamburg (DE)**

(54) **Container inner surface tester.**

(57) A container inner surface tester detects a major-defective container as well as foreign substances, dust, scratches, etc. on the surface of an axis-symmetrical container to be carried on a conveyor by irradiating the inner surface of the container using a illuminator concentric with the container, capturing the irradiated surface of the container in the axis direction, and analyzing the captured concentric image. The tester comprises, in addition to a minor-defect-detecting binarization circuit 24 for determining whether or not the test container has a minor defect, a major-defect-detecting binarization circuit 25 in which an image signal 23a is binarized with a binarization threshold for use in detecting picture elements indicating a major defect having the intensity larger than a normal black, white, or intensity difference level, and the number of picture elements indicating major defects for each window area is compared with an area threshold for use in determining a major defect so as to determine whether or not the container to be tested has a major defect and immediately stop the production line of containers when a major defect detection signal HDF is outputted. The tester can detect defects likewise on polygonal containers.

EP 0 610 956 A2

Fig. 3

## Background of the Invention

### Field of the Invention

The present invention relates to a container inner surface tester for detecting foreign substances, dust, scratches, etc. on the surface of a cylindrical container to be carried on a conveyor by checking the surface through image processing, and more specifically to a cylindrical container inner surface tester for detecting a defective container by irradiating the inner surface of the cylindrical container using a ring-shaped illuminator concentric with the axis-symmetrical cylindrical container, capturing the irradiated surface of the container in the axis direction, and analyzing the captured concentric image.

### Description of the Related Art

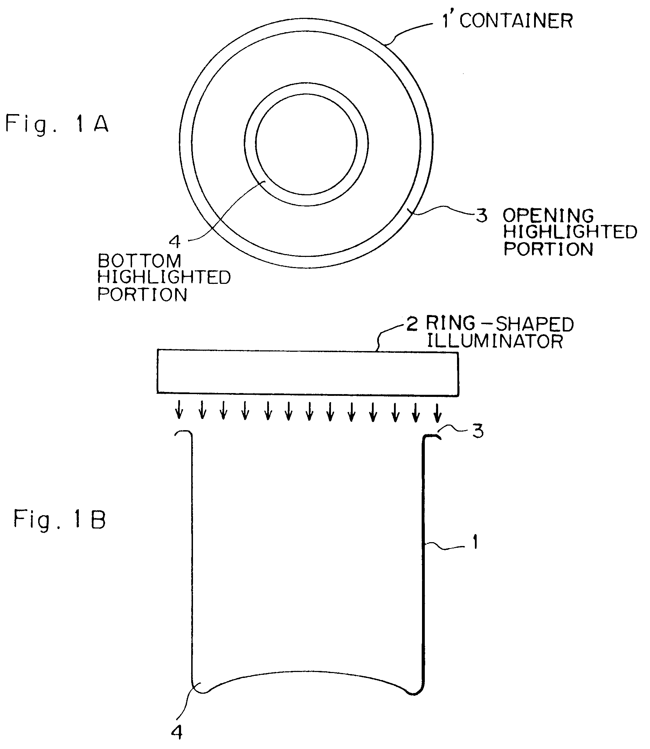

Figures 1A and 1B show the conventional method of viewing the inner surface of a cylindrical container having metallic luster on its inner surface. Figure 1A shows multi-value continuous tone image data 1' (hereinafter simply referred to as image data 1') stored in an image memory after capturing a cylindrical container 1 showing on Figure 1B from above in the axis direction through a TV camera. Figure 1B is a sectional view of the cylindrical container 1 and a ring-shaped illuminator 2 for irradiating the cylindrical container from above. In Figure 1B, the illuminator 2 and the cylindrical container 1 (hereinafter referred to simply as the container 1) are concentric to each other.

As shown in Figure 1B, if the illuminator 2 evenly irradiates the inner surface of the container 1 and the TV camera captures the container 1 from above, then irradiation lights reflect on the inner surface having metallic luster and form image data 1' indicating concentric illumination variations (hereinafter referred to as an illumination pattern) as shown in Figure 1A. Figure 1A shows an opening highlighted portion 3 and a bottom highlighted portion 4 formed by the direct reflection of the above described irradiation lights on the opening and bottom portion of the container 1.

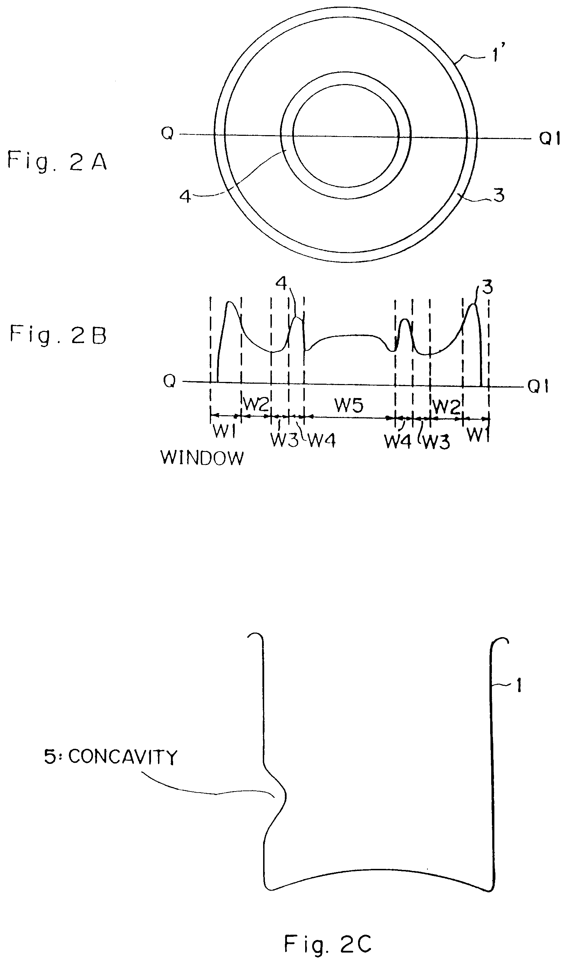

Figure 2A shows a scanning line Q-Q1 running through the center of the image data 1' of the container 1 shown in Figure 1A. Figure 2B is the graph indicating changes in reflection illumination, that is, image intensity, along the scanning line Q-Q1 inside the container. The graph can also be obtained if the line Q-Q1 is rotated with the center of the container set as the center of the rotation. The illumination pattern, that is, generation of highlighted portions and non-highlighted portions, depends on a container to be checked, or on the direction of an irradiation light and of a viewing point. However, the feature that illumination changes in a concentric pattern is maintained for any container.

In the example shown in Figure 2B, the intensity variations can be classified into 5 level areas from W1 to W5. First area W1 refers to the opening highlighted portion 3; second area W2 refers to the internal upper middle part of the container indicating comparatively high intensity; third area W3 refers to the internal lower middle part of the container subject to less amount of light of the illuminator 2 shown in Figure 1B indicating intensity lower than other portions of the container; fourth area W4 refers to the highlighted portion of the bottom; and fifth area W5 refers to the inner bottom of the container.

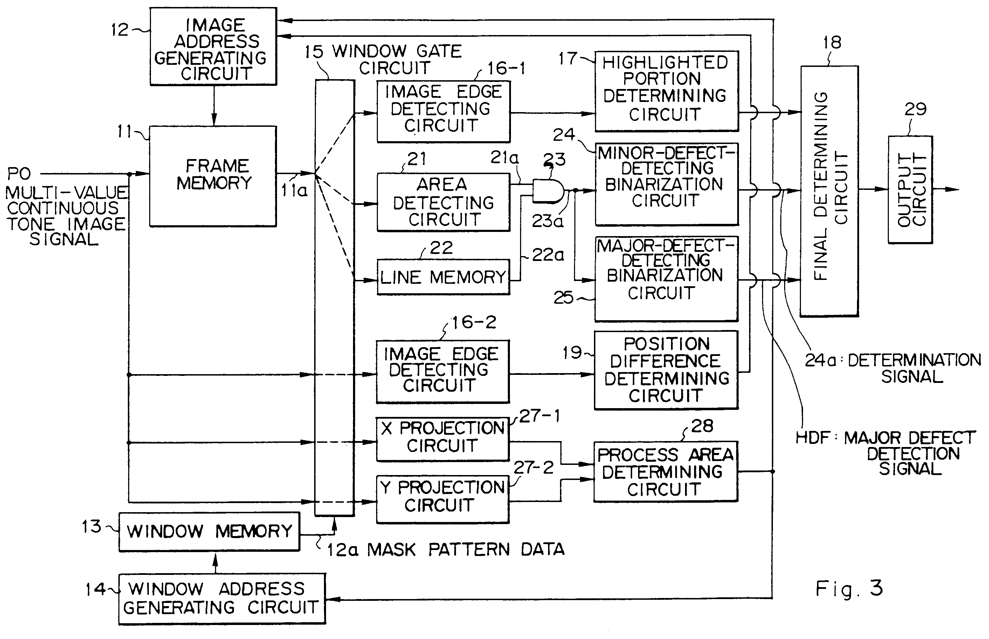

Conventionally, these areas W1 - W5 are provided with a window individually and assigned thresholds used for detecting defects such as blacks spots (black points) and white spots (white points) according to the optical characteristics of each area. One method of detecting a defect is, for example, to convert by a predetermined threshold a multi-value continuous tone image signal of 8 bits, etc. to a binary value. The signal is obtained by analog/digital(A/D)-converting an analog video signal (analog continuous tone image signal) obtained by scanning a target image. Another method is a differentiation method in which the above-described video signal is differentiated through a differentiation circuit as shown in Figure 3 to extract a defect signal. In the differentiation method, a pulse is generated in either a positive or negative direction for the contour of a test object, whereas both the bidirectional pulses are generated simultaneously at a fine defective point, thereby extracting a defect.

That is, if the following expressions exist between a value $P(i,j)$ and values $P(i-\alpha,j)$ and $P(i+\beta,j)$, where $P(i,j)$ indicates a target point (coordinates $x=i$ and $y=j$) referred to by a signal $P(x,y)$ obtained by differentiating an analog continuous tone image signal generated by a raster scanning operation, and $P(i-\alpha,j)$ and $P(i+\beta,j)$ indicate the points $\alpha$ picture elements forward and $\beta$ picture elements backward of the above-described point $P(i,j)$ in the x direction of the scanning line,

$$P(i,j) - P(i-\alpha,j) > TH1 \text{ and}$$
$$P(i+\beta,j) - P(i,j) > TH1$$

where TH1 indicates a predetermined threshold (positive value).

A binary function value $PD(i,j)$ indicting a black level defect on a target point is defined as "1". If both of the above equations are not true or none of them are true, the target point is determined as a normal point with a value $PD(i,j) = 0$.

Containers for containing food, etc. are generally manufactured in large quantities per hour. When a fault has arisen in a container manufacturing device in a production line, a large number of defective products may be produced in a short time unless the entire production line is immediately stopped.

If a major defect has arisen in the container 1 as shown in Figure 2C, then the container production line should have a serious trouble to recover from. Leaving the defect as it is may generate a more serious trouble such as a larger damage to the container production line, and take much time in recovering the production from the trouble and bring a considerable economic loss.

Conventionally, a consecutive defect monitoring process has been performed to prevent defective products from being produced in large quantities. In this process, a major defect threshold is preliminarily set in a test device. An occurrence of major defects is detected and a major defect alarm is issued if determination of the occurrence of a major-defective product is made consecutively and the number of consecutive defective products exceeds the predetermined consecutive defect threshold.

Furthermore, there is a conventional method of monitoring a defective percentage. In this method, a rate of defective containers in the total number of containers is constantly monitored, and a test device calculates the defective percentage which varies each time determination is made to detect major defects and to issue a major defect alarm when the defective percentage exceeds a defective percentage threshold preliminarily set in the test device.

However, the consecutive defect monitoring method has the inevitable problem that it is very difficult to detect a major-defective container when it does not appear consecutively on a production line and that major-defective containers are produced by the predetermined number (equal to a consecutive defect threshold) until a major-defective container is detected.

Also in the defect rate monitoring method, a delay arises between an actual occurrence of major defects and the detection of major defects by a test device, and a large number of major-defective containers are produced during the period of the delay.

Summary of the Invention

Therefore, the first object of the present invention is that an occurrence of major defects should be detected not either by the above described consecutive defect monitoring method or by the defect rate monitoring method, but should be immediately determined by individually checking each container.

Thus, the second object of the present invention is to provide a cylindrical container inner surface tester for reducing an economic loss by immediately stopping faulty production of major-defective containers after quickly detecting a major-defective container. An object of the present invention is to provide a cylindrical container inner surface tester for reducing an economic loss by immediately stopping faulty production of major-defective containers after quickly detecting a major-defective container.

The cylindrical container inner surface tester detects a minor-defective container and a major-defective container by irradiating the inner surface of the cylindrical container by the ring-shaped illuminator concentric with the axis-symmetric cylindrical container, capturing the irradiated surface of the cylindrical container using a TV camera in the axis direction of the cylindrical container, and detecting a major-defective container as well as a minor-defective container, by analyzing the captured concentric images.

That is, in the cylindrical container inner surface tester according to the first principle of the present invention, a memory device stores as captured image data a multi-value continuous tone image signal PO obtained by A/D converting continuous tone image signals obtained through capturing and scanning processes. The memory device comprises, for example, a frame memory, an image address generating circuit, etc.

A window generating device divides the image area on the inner surface of the above described cylindrical container into a plurality five of window areas. The window generating device comprises, for example, a window memory, a window address generating circuit, etc.

For each window area, a minor-defect-detecting device sets a first fixed binarization threshold for detection of a picture element indicating a black defect (hereinafter referred to as a first black level) and a first fixed binarization threshold for detection of a picture element indicating a white defect (hereinafter referred to as a first white level). Then, the tester obtains a sum of the number of picture elements indicating black and white defects for each window area after converting to a binary value a multi-value continuous tone image signal read by scanning the frame memory with the first black and white levels set for each window area. Finally, the tester determines whether or not the test cylindrical container is a defective container based on the value of the sum (whether or not the sum exceeds a first area threshold set for each window area for detection of a defective container). The minor-defect-detecting device comprises, for example, a minor-defect-detecting binarization circuit, etc.

For each of the above described five window areas, a first major defect detection threshold setting device sets a second fixed binarization threshold corresponding to a black level higher than the first black level inclusive (hereinafter referred to as a second black level), and a second fixed binarization threshold corresponding to a white level higher than the first white level inclusive (hereinafter referred to as a second white level). The first major defect detection threshold setting device comprises, for example, a major-black-defect-detecting binarization threshold setting port, a major-white-defect-detecting binarization threshold setting port, etc.

The second major defect detection threshold setting devices sets a second area threshold which is used in detecting a major defective container and has a value larger than the above described first area threshold when a picture element indicating a defect higher than the first black level is equal to the second black level, or a picture element indicating a defect higher than the first white level is equal to the second white level. The second major defect detection threshold setting device comprises, for example, a major defect area threshold setting port, etc.

The major-defect-detecting device externally outputs a major defect detection signal indicating that the present cylindrical container is defective when a sum of the number of picture elements indicating black defects and the number of picture elements indicating white defects for each window area exceeds a second area threshold set for the present window area based on the binary level of the second black and white levels. The major-defect-detecting device comprises, for example, a major-defect-detecting binarization circuit comprising an OR circuit, a counter, a comparator, etc.

For example, the amount of hardware can be reduced by setting the first black level as being equal to the second black level, the first white level as being equal to the second white level, or the first area threshold as being equal to the second area threshold.

In the cylindrical container inner surface tester according to the second principle of the present invention, a storage device stores as captured image data a multi-value continuous tone image signal PO obtained by A/D-converting a continuous tone image signal obtained by capturing and scanning operations. The storage device comprises, for example, a frame memory, an image address generating circuit, etc.

A window generating device divides an image area in the above described cylindrical container into a plurality of five window areas used in detection of picture elements indicating a defect. The window generating device comprises, for example, the window memory, a window address generating circuit, etc.

For each of the above described window areas, a minor-defect-detecting device sets a predetermined first difference binarization threshold (hereinafter referred to as a first difference level) used in detecting a picture element indicating a defect, and obtains the number of picture elements indicating a defect for each of the above described window areas by converting to binary data with the first difference level set for the present window area an absolute number of a difference obtained by subtracting a value of a target picture element in the screen scanning line where a multi-value continuous tone image signal read by scanning the frame memory, etc. is located, from a value of a background picture element a predetermined number set for the present window area forward or backward of the target picture element. Then, it determines whether or not the present container is defective depending on whether the number of picture elements indicating the defect exceeds the first area threshold set for the present window area and used in detecting a defective container. The minor-defect-detecting device comprises, for example, the minor-defect-detecting binarization circuit, etc.

A first major defect difference threshold setting device sets for each of the above described window areas a predetermined second difference binarization threshold (hereinafter referred to as a second difference level) corresponding to an intensity difference larger than the first difference level inclusive. The first major defect difference threshold setting device comprises, for example, a Central Processing Unit (CPU) not shown in the drawings, a major defect difference threshold setting port, etc.

A second major defect difference threshold setting device sets a second area threshold used in detecting a major-defective container having a value larger than the first area threshold when the first difference level is equal to the second difference level. The second major defect difference threshold setting device comprises, for example, a CPU not shown in the drawings, a major defect area threshold setting port, etc.

The major-defect-detecting device externally outputs a major defect detection signal (HDF, etc.) indicating that the present cylindrical container has a major defect when the number of picture elements indicating a defect for each of the above described window areas in which the binary level is a second difference level exceeds a second area threshold set for the present window. The major-defect-detecting device comprises a major-defect-detecting binarization circuit comprising, for example, a FIFO memory, a subtracter, an absolute value circuit, a major defect difference threshold setting port, comparator, counter, a major defect area threshold setting port, comparator, etc.

For example, the amount of hardware can be reduced by setting the first difference level as being equal to the second difference level or the first area threshold as being equal to the second area threshold.

Furthermore, in the first or second principle of the present invention, the production line of cylindrical containers can be automatically stopped according to the above-described major defect detection signal.

When the major defect detection signal is outputted, the name of the window area associated with the major defect detection signal is displayed on a screen used when the device is inspected and monitored.

In a case of a major defect of the container, for an example, a concavity is found as a major defect in the side of the container. If such a concavity has arisen, the reflection of a light inside the container is disturbed and the illumination pattern does not indicate a concentric pattern, but an asymmetric highlighted portion or dark portion. Therefore, a window can be set outside an extremely highlighted portion such as two highlighted portions on the surface of a non-defective container or an extremely dark portion generated by a light not reflected toward the observer so that the asymmetric highlighted or dark portion can be extracted by a binarizing method for images. A deformation of a container can be detected according to the similar principle. According to the above described optical characteristics, the present invention defines a major defect of a container by a method different from the conventional defective container detecting method and externally outputs a major defect alarm signal by setting a binarization threshold or an area threshold used when images are converted to binary data. At this time, for example, black defect area and white defect area are calculated by a fixed binarizing method used as a binarizing method for images so as to obtain a black defect area and a white defect area.

Brief Description of the Drawings

Figure 1A shows a multi-value continuous tone image data 1' obtained in an image memory by capturing the cylindrical container 1 by a TV camera from above in the axis direction;
Figure 1B shows the cylindrical container 1 and the sectional view of the ring-shaped illuminator 2 for irradiating the cylindrical container from above;

Figure 2A shows a scanning line Q-Q1 passing through the center of the image data 1' of the container 1 shown in Figure 1A;
Figure 2B is a graph indicating the reflection illuminance inside the container 1 along the scanning line Q-Q1, that is, a change in intensity of images;
Figure 2C shows an example of a major defect of the container 1;
Figure 3 is the block diagram of the hardware of an embodiment associated with the cylindrical container inner surface tester according to the present invention;
Figure 4 is the block diagram showing the detailed configuration of the major-defect-detecting binarization circuit 25 shown in Figure 3;
Figure 5 is the block diagram showing another configuration example of the major-defect-detecting binarization circuit 25;
Figure 6 shows the third configuration example of the major-defect-detecting binarization circuit 25;
Figure 7 shows the fourth configuration example of the major-defect-detecting binarization circuit 25;
Figure 8 is the block diagram showing the hardware of another embodiment of the cylindrical container inner surface tester according to the present invention;
Figure 9 shows a configuration example of the defect-detecting-binarization circuit 26 shown in Figure 8;
Figure 10 shows an example of a square pole container as an example of a polygonal pole container; and
Figure 11 shows an image 95 of the square pole container 91 captured and stored in the frame memory 21.

Description of the Preferred Embodiments

Figure 3 is the block diagram showing the hardware of an embodiment of the cylindrical container inner surface tester according to the present invention. In Figure 3, the frame memory 11 receives a multi-value (for example, 8 bits) continuous tone image signal PO obtained by A/D-converting a video signal obtained by raster-scanning an image of the container 1 shown in Figure 1B captured by the TV camera, and stores the multi-value continuous tone image signal PO as image data '1 shown in Figure 1A.

The address generating circuit 12 generates an address of the image data 1' for the above-described frame memory 11.

The window memory 13 stores mask pattern data for each window. It stores several kinds of concentric-ring-shaped patterns, each pattern corresponding to an illumination pattern depending on the form of a container to be tested.

A window address generating circuit 14 generates an address of a ring-shaped window pattern for the window memory 13.

A window gate circuit 15 masks a multi-value continuous tone image signal PO or an image signal 11a read from the frame memory 11 with mask pattern data 12a outputted by the window memory 13 so that only an image signal PO or 11a in a specified window area can pass through.

Image edge detecting circuits 16-1 and 16-2 detect the outline of an image for each scanning line, that is, the outer and inner ends (points in the outer and inner circumferences). Image edge detecting circuits 16-1 and 16-2 convert an inputted image signal to binary data using a predetermined threshold used to locate a target image or check the circularity of the outline of the container to be tested, and stores in its memory the coordinates of rise and fall points of the binary signal as image edge data.

A highlighted portion determining circuit 17 checks the circularity of the outline of the container in reference to the coordinates of the outer and inner circumferences detected by image edge detecting circuit 16-1, and provides the results for a final determining circuit 18.

A position difference amount detecting circuit 19 detects the difference between the position of the center of the present image detected based on the image edges by entering the latest multi-value continuous tone image signal PO and a predetermined position of the center of the window so as to generate a window at a right position to an image to be tested.

An area detecting circuit 21 receives the multi-value continuous tone image signal 11a outputted by the frame memory 11 and transmitted through the window gate circuit 15, and outputs an area detection signal 21a for use in setting an area in 1 horizontal scanning line in which a defect is detected, that is, an area delimited by the outline of the container to be tested.

A line memory 22 receives and temporarily stores an image signal 11a for the 1 horizontal scanning line synchronously with the area detecting circuit 21.

An AND circuit 23 ANDs the area detection signal 21a and the corresponding continuous tone image signal 22a outputted by the line memory 22 for each horizontal scanning line, and outputs a continuous tone image signal only for an area to be searched for a defect 23a (hereinafter referred to as a test area continuous tone image signal). Thus, the container (refer to the container 1 shown in Figure 1B) is captured as being located at a position off the center, and a continuous tone image signal of the area outside the container, that is, the background of the container can be correctly removed even if image data (refer to the image data 1' shown in Figure 1A) do not indicate an exact circle.

A minor-defect-detecting binarization circuit 24 detects a picture element indicating a minor defect, not a major defect. The minor-defect-detecting binarization circuit 24 converts the test area continuous tone image signal 23a to binary data using a fixed binarization threshold (a threshold for use in a fixed binarizing method) preliminarily set for each window area. Then, separately or in parallel, it converts the difference in intensity between a target picture element of the continuous tone image signal 23a and its surrounding picture elements using a predetermined difference binarization threshold preliminarily set for each window area (a threshold used in a difference binarizing method). Then, the minor-defect-detecting binarization circuit 24 extracts picture elements indicating minor defects. The circuit 24 counts the number of the extracted picture elements indicating defects as a defective area value, compares the count result with a preliminarily set minor defect detection threshold, and outputs a resultant defect/non-defect signal 24a to the final determining circuit 18.

The minor-defect-detecting binarization circuit 24 may contain the peak-valley detecting binarization circuit invented by the inventor of the present invention (refer to USP5233199). The peak-valley detecting binarization circuit obtains two differences by subtracting the value of a target picture element in a scanning line of the test area continuous tone image signal 23a from the values of background picture elements a predetermined number of picture elements (hereinafter referred to as $\alpha$ picture elements) forward and backward of the target picture element (hereinafter referred to as a forward background picture element and a backward background picture element respectively), and determines the target picture element to be a picture element indicating a defect when the differences indicate the same polarity, the absolute value of one of the differences is larger than a predetermined first threshold corresponding to the polarity, and the other is larger than a predetermined second threshold corresponding to the polarity.

The major-defect-detecting binarization circuit 25 forms an important part of the present invention as will be later explained in detail, and outputs a major defect detection signal HDF to the final determining circuit 18.

Next, an X projection circuit 27-1 obtains X direction projection pattern data of an image to be tested using a multi-value image signal PO transmitted through the window gate circuit 15.

A Y projection circuit 27-2 obtains X direction projection pattern data of an image to be tested.

A processed area determining circuit 28 determines a container image area (rectangular area) to be tested using data outputted by the above described X projection circuit 27-1 and the Y projection circuit 27-2. Thus, the image area to be tested can be correctly determined even if other containers are captured in the same test screen.

The final determining circuit 18 receives and temporarily stores the defect/non-defect signal from the minor-defect-detecting binarization circuit 24 and the major defect detection signal HDF from the major-defect-detecting binarization circuit 25 each time a window area is scanned. After the scanning operation is completed for all window areas, the major defect detection signal HDF is outputted to an output circuit 29 if it has been received at least once. If it has never been received and the defect signal 24a has been received, then a minor defect signal is outputted to the output circuit 29. If the major defect detection signal HDF has never been received and a non-defect signal 24a has been received, then a non-defect signal is outputted to the output circuit 29.

The output circuit 29 is an interface circuit for an external device of the tester, and externally outputs a signal corresponding to a received signal.

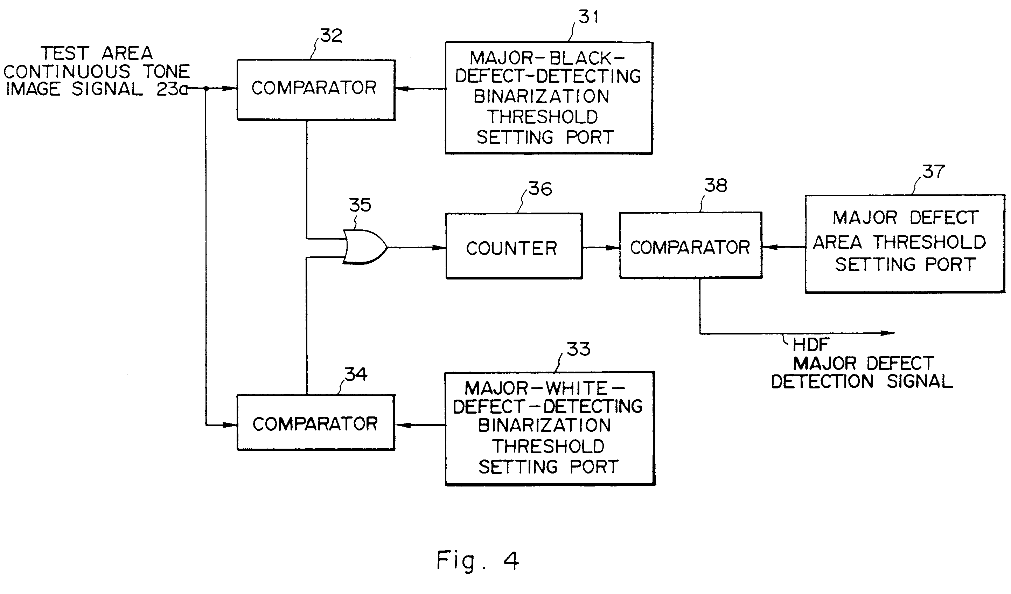

Figure 4 is the block diagram showing the detailed configuration of the major-defect-detecting binarization circuit 25. In Figure 4, the major-black defect-detecting binarization threshold setting port 31 detects a picture element indicating a major black defect. A comparator 32 converts the test area continuous tone image signal 23a inputted by the AND circuit 23 to a fixed binary value using a threshold inputted by the major-black-defect-detecting binarization threshold setting port 31.

The major-white-defect-detecting binarization threshold setting port 33 is a circuit for detecting a picture element indicating a major white defect. A comparator 34 is a circuit for converting the test area continuous tone image signal 23a received from the AND circuit 23 to a fixed binary value according to a threshold received from the major-white-defect-detecting binarization threshold setting port 33.

The OR circuit 35 composes the outputs of the comparators 32 and 34, and outputs the result to a counter 36. Counter 36 counts picture elements indicating major defects, obtains the sum of picture elements indicating major defects, that is, calculates the area containing the picture elements indicating major defects. When a 1-window area has been scanned, the above described area value of picture elements indicating major defects is outputted to a comparator 38.

The major defect area threshold value setting port 37 outputs a major defect area threshold set for each window area to the comparator 38 .

The comparator 38 compares a major defect area threshold outputted by the major defect area threshold setting port 37 with an area value, outputted by the counter 36, of picture elements indicating a major defect. If the area threshold is smaller than the area value outputted by the counter, then a major defect detection signal HDF indicating that the present cylindrical container has a major defect (that is, a major defect has arisen on the container) is outputted to the final determining circuit 29 shown in Figure 3.

A fixed binarization threshold to be set in each of the major-black-defect-detecting binarization threshold setting port 31, the major-white-defect-detecting binarization threshold setting port 33, and the major defect area threshold setting port 37 is set by a CPU (not shown in any figure) for each window area before scanning an image. The intensity of a test image is obtained by an image irradiation measuring unit, and is used to appropriately adjust the fixed binarization threshold.

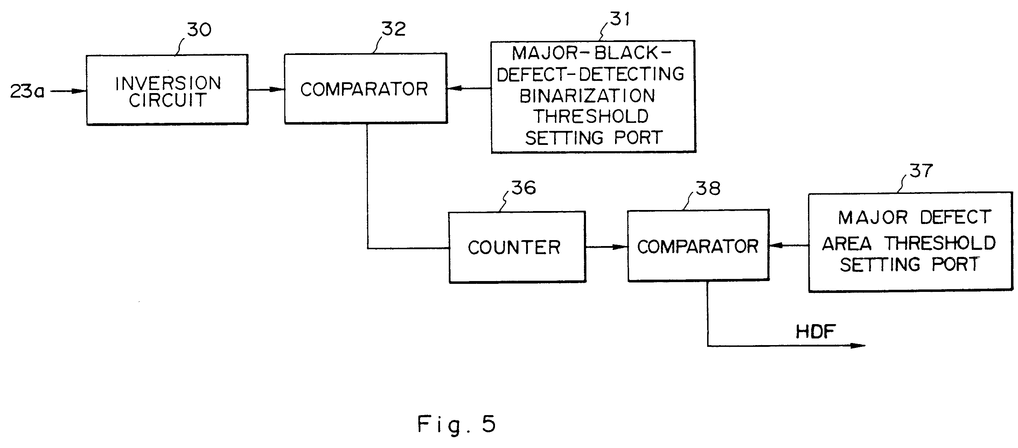

Figure 5 is the block diagram showing another example of the configuration of the major-defect-detecting binarization circuit 25. In Figure 5, the major-white-defect-detecting binarization threshold setting port 33, the comparator 34, and the OR circuit 35 shown in Figure 4 are replaced with a inversion circuit 30, followed by a comparator 32. The function of the circuit shown in Figure 5 can be equalized to that shown in Figure 4 by rendering the comparator 34 inoperative by setting the major-white-defect-detecting binarization threshold setting port 33 shown in Figure 4 the maximum intensity value of an image together with the inversion circuit 30 set to a normal setting. Besides, the function of the circuit shown in Figure 4 can be realized by counting picture elements indicating a major black defect by scanning one window area with the inversion circuit 30 set to a normal setting and then by scanning again the same window area to count picture elements indicating a black defect together with the inversion circuit 30 set to a reverse setting.

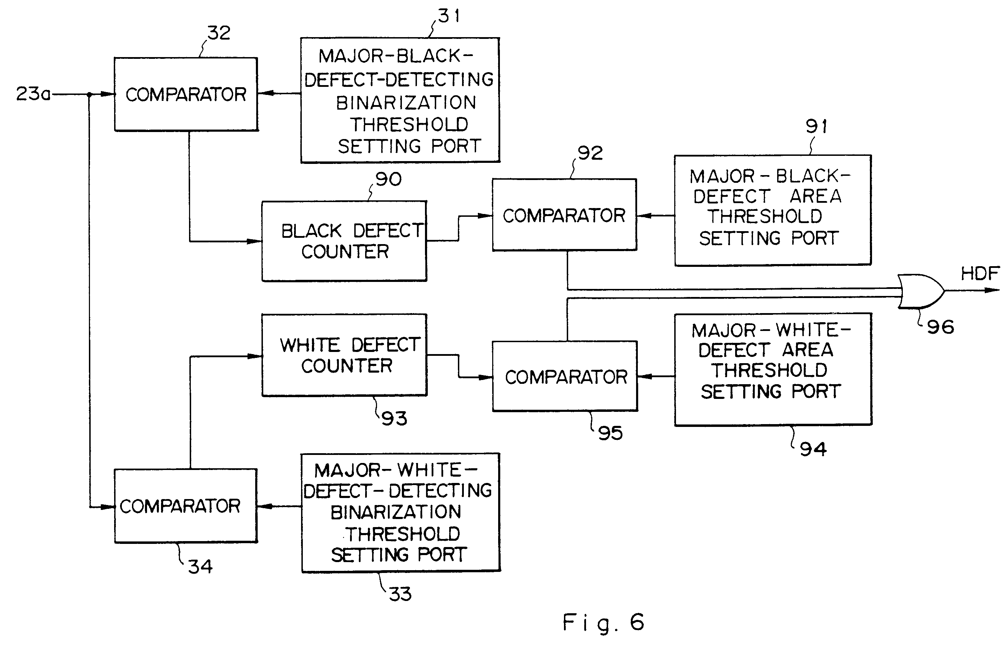

Figure 6 shows the third example of the configuration of the major-defect-detecting-binarization circuit 25. In the circuit shown in Figure 6, like in the circuit shown in Figure 4, major black and white defect picture element detecting binarization thresholds can be set in setting ports 31 and 33 respectively, and in addition thereto, major black and white defect picture element area thresholds are individually set in a major-black-defect area threshold setting port 91 and a major-white-defect area threshold setting port 94 respectively. Additionally, picture elements indicating both black and white defects can be counted in the same scanning period. Like the circuit shown in Figure 4, in the circuit, the number of picture elements (area value) indicating a major black defect is counted using a black defect counter 90, a major-black-defect area threshold setting port 91, and a comparator 92. On the other hand, the number of picture elements indicating a major white defect is counted using a white defect counter 93, a major-white-defect area threshold setting port 94, and a comparator 95. Finally, a logical sum of each detected signal (count values) is obtained by an OR circuit 96 and outputted to the final determining circuit shown in Figure 3.

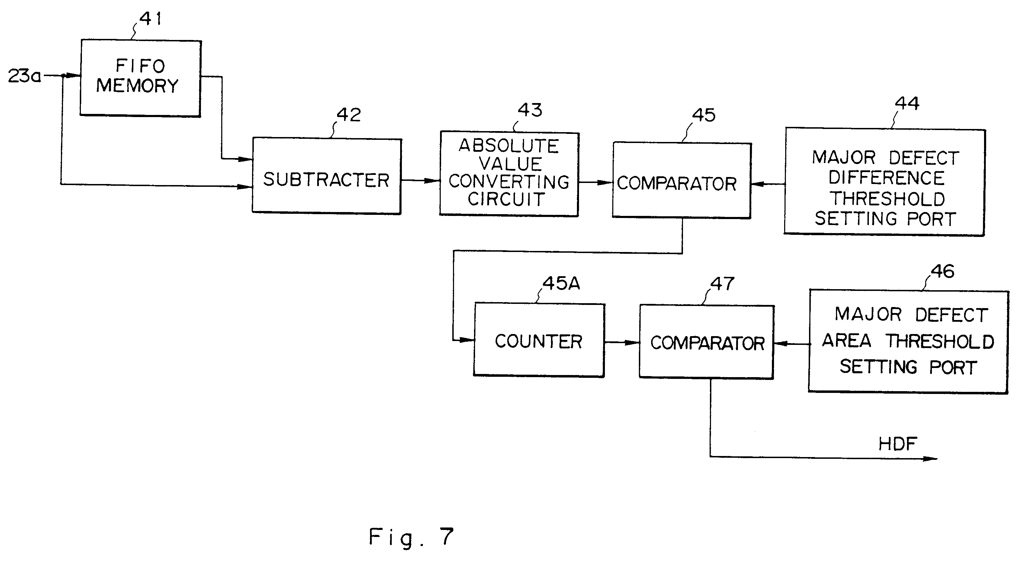

Figure 7 shows the fourth example of the configuration of the major-defect-detecting-binarization circuit 25. In Figure 7, a FIFO memory 41 temporarily stores the test area continuous tone image signal 23a, and outputs a signal delayed by a specified number of picture elements (that is, a background picture element signal). A subtracter 42 subtracts the intensity value of the test area continuous tone image signal (target picture element) directly entered from the AND circuit 23 from the intensity value of the background picture element entered by the FIFO 41, and outputs the result (difference signal) to an absolute value converting circuit 43. The absolute value converting circuit 43 checks the sign bit of the entered result. If the sign bit indicates a negative value, it converts the value to a positive value and outputs it to a comparator 45. The comparator 45 compares the output of the absolute value converting circuit 43 with a predetermined difference threshold set in the major defect difference threshold setting port 44, converts the result into a difference binarization signal, and outputs the difference binarization signal to a counter 45A. The counter 45A counts the number of the difference binarization signals, calculates the area value of the difference, and outputs the area value to a comparator 47 after one window area has been scanned. The comparator 47 compares an output of counter 45A with a major defect area threshold set in the major defect area threshold setting port 46, and outputs the major defect detection signal HDF indicating that the present container has a major defect to the final determining circuit 29 shown in Figure 3 if the counter-outputted area value is larger than the set area threshold.

The thresholds set in the major defect difference threshold setting port 44 and the major defect area threshold setting port 46 are set by a CPU (not shown in the drawings) for each window area before scanning an image.

As another example of the major-defect-detecting-binarization circuit 25 shown in Figure 7, the absolute value converting circuit 43 can be removed so that the difference image signal can indicate either of positive and negative values. On the other hand, in place of the major defect difference threshold setting port 44, a counter 45A shown in Figure 5 receives, to obtain an area value, a logical sum of binary image signals obtained through binarization in each comparator using respective binarization thresholds separately set for positive and negative values of a major defect.

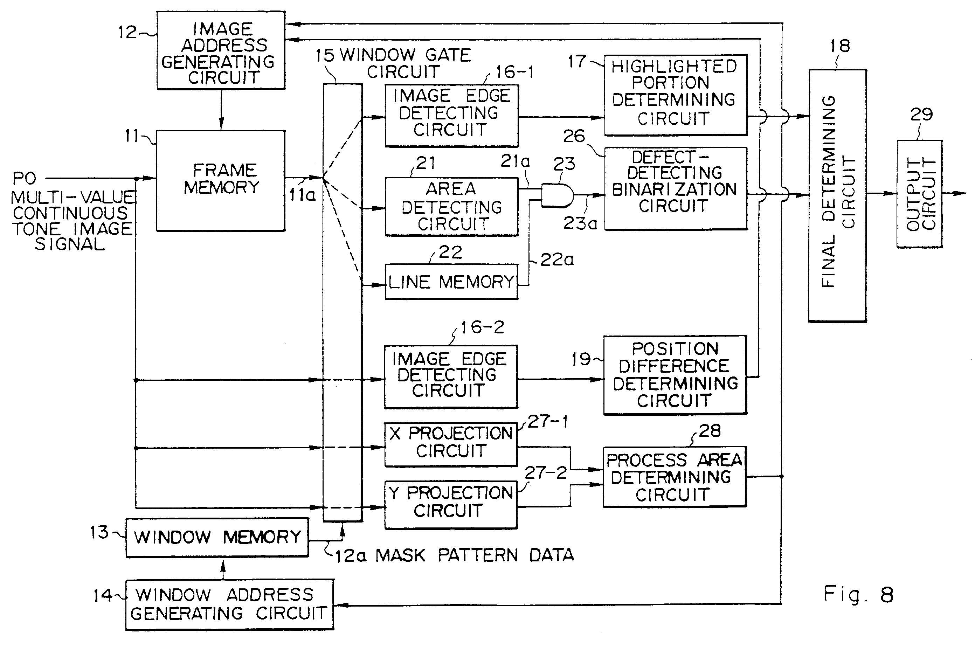

Figure 8 is the block diagram showing another embodiment of the hardware of the cylindrical container inner surface tester according to the present invention. In the cylindrical container inner surface tester shown in Figure 8 the minor-defect-detecting-binarization circuit 24 and the major-defect-detecting-binarization circuit 25 shown in Figure 3 both are incorporated into a defect-detecting-binarization circuit 26. The configuration of the cylindrical container inner surface tester for other components is the same as those shown in Figure 3.

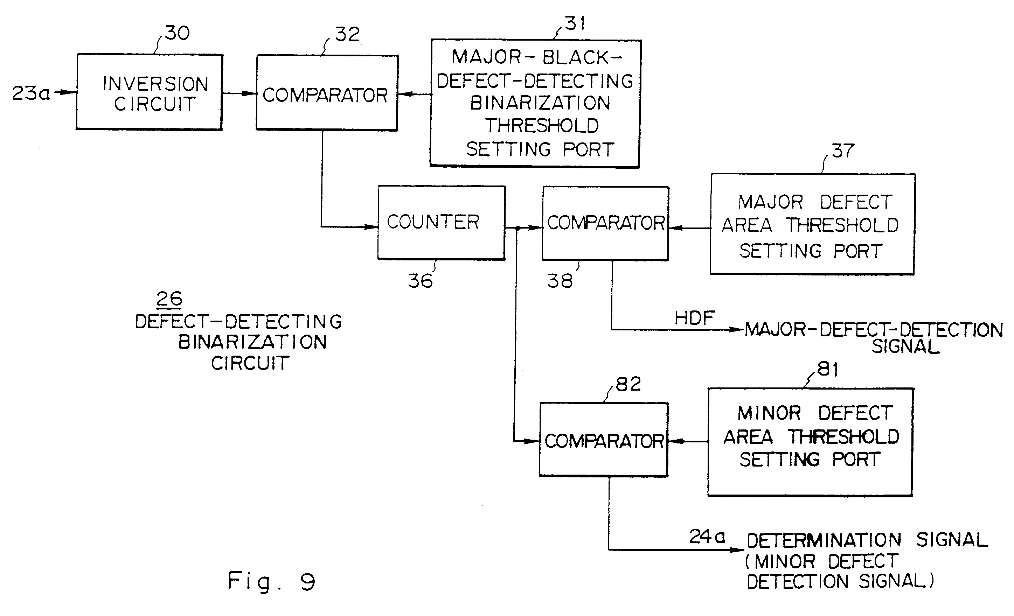

Figure 9 shows an example of the configuration of the defect-detecting-binarization circuit 26. The defect-detecting-binarization circuit 26 shown in Figure 9 sets an identical value to the binarization threshold of a picture element indicating a major defect and that of a picture element indicating a minor defect in the black-defect-detecting binarization threshold setting port 31, and sets area value thresholds as different values between major and minor defects in the major defect area value threshold setting port 37 and the minor defect area value threshold setting port 81 respectively. After the comparator 32 detects a picture element indicating a defect and the counter 36 calculates an area of picture elements indicating a defect, the comparator 38 detects a major defect and outputs a black defect detection signal HDF while a comparator 82 detects a minor defect and outputs a defect/non-defect signal 24a based on the area value of picture elements indicating a defect.

The occurrence of major-defective containers can be reduced by stopping the production line of containers concurrently in outputting the major defect detection signal HDF. At this time, the cause of the defect can be easily estimated by displaying the name of the window area, which has caused to generate the major defect detection signal HDF on the CRT screen for monitoring the test.

Cylindrical containers have been considered above, but the present invention is not limited to a test of cylindrical containers, and can be applied to a test of the inner surface of a polygonal pole container having angles equal to or more than three.

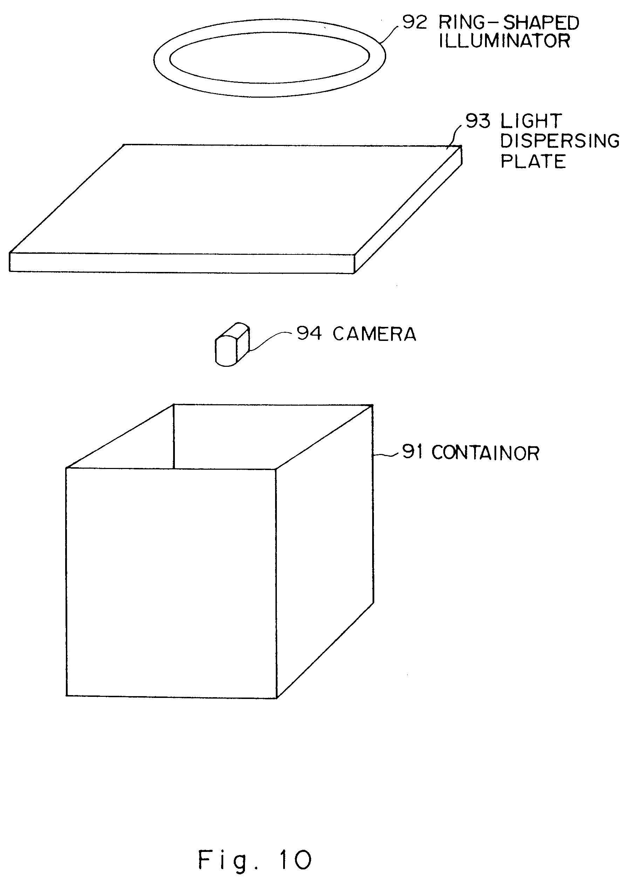

Figure 10 shows an example of a square pole container as an example of a polygonal pole container. With the embodiment shown in Figure 10, a ring-shaped illuminator 92 irradiates the inner surface of a square pole container 91 from above it through a light dispersing plate 93. A camera 94 is located above the container and captures the inner surface of the square pole container 91.

In this case, a container conveyor fixes the position of the square pole container 91 during the transmission of the square pole container 91 to the above described capturing position. The position of the polygonal pole container can be easily fixed by the container conveyor.

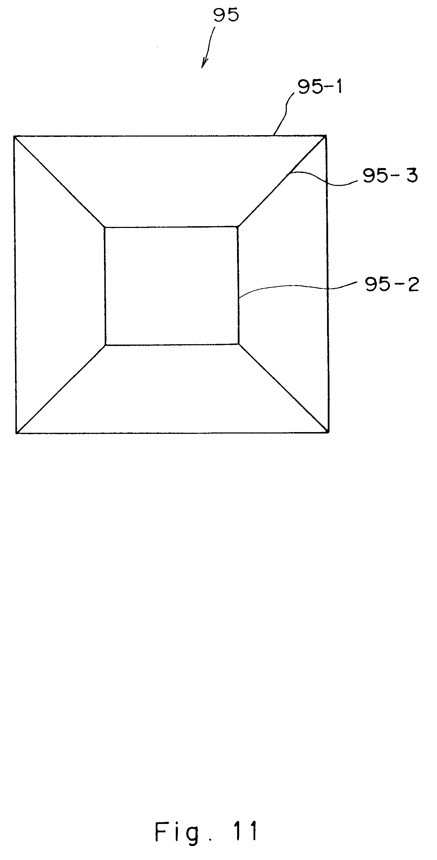

Figure 11 shows an image 95 of the square pole container 91 captured and stored in the frame memory 21. The image 95 shows variations in intensity for four brims 95-1 of the upper opening, connections 95-2 between the bottom and the four sides, and connections (corners) 95-3 of the four sides. As with the cylindrical container 2, a window area and its threshold are set for each intensity variation to detect minor and major defects.

**Claims**

1. A container surface tester for detecting a defective container by irradiating a surface of a container using an illuminator, capturing an irradiated surface of the container, and analyzing a captured image, said tester comprising:

    memory means for storing as captured image data a multi-value continuous tone image signal obtained by A/D-converting continuous tone image signals obtained through capturing and scanning processes; and

    a defect-detecting means for determining, by scanning said captured image data stored in said memory means, whether or not the container to be tested is a defective container based on the value of the area of a defect of the container.

2. The container surface tester according to Claim 1 wherein said container is axis-symmetrical and cylindrical, and the defect of the container is detected by irradiating an inner surface of said container, said illuminator is ring-shaped one concentric with the cylindrical container, said irradiated surface of the container is captured in an axis direction, to provide a concentric image for an analyzation,

    said defect-detecting means obtains a sum of numbers of picture elements indicating defects and determines the defect based on whether or not the sum exceeds an area threshold set for detection of the defective container.

3. The container surface tester according to claim 1 wherein

said defect detecting means comprises means for setting a first fixed binarization threshold for detection of a picture element indicating a black defect (hereinafter referred to as first black level), and a first fixed binarization threshold for detection of a picture element indicating a white defect (hereinafter referred to as first white level), obtaining a sum of numbers of picture elements indicating black and white defects after converting to a binary value the multi-value continuous tone image signal read by scanning the frame memory with the first black and white levels, and finally determining whether or not the cylindrical container to be tested is a defective container based on the value of the sum of the numbers of the picture elements indicating black and white defects and based on whether or not the sum exceeds a first area threshold for detection of a defective container.

4. The container according to Claim 1 wherein said container comprises a polygonal pole container.

5. A cylindrical container inner surface tester for detecting a major-defective container as well as a minor-defective container by irradiating an inner surface of an axis-symmetrical container (1) using a ring-shaped illuminator (2) concentric with the cylindrical container, capturing an irradiated surface of the container (1) in an axis direction, and analyzing a captured concentric image, said tester comprising:

    memory means (11, 12) for storing as captured image data (1') a multi-value continuous tone image signal (PO) obtained by A/D-converting continuous tone image signals obtained through capturing and scanning processes;

    window generating means (13, 14) for dividing an image area on the inner surface of the cylindrical container into a plurality of window areas (W1 through W5);

    a minor-defect detecting means (24) for setting, for each of said window areas, a first fixed binarization threshold for detection of a picture element indicating a black defect (hereinafter referred to as a first black level) and a first fixed binarization threshold for detection of a picture element indicating a white defect (hereinafter referred to as a first white level), obtaining a sum of numbers of picture elements indicating black and white defects for each of the window areas after converting to a binary value the multi-value continuous tone image signal (1') read by scanning the frame memory with the first black and white levels set for each of the window areas (W1 through W5), and finally determining whether or not the cylindrical container to be test is a defective container based on the value of the sum of the numbers of the picture elements indicating black and white defects (whether or not the sum exceeds a first area threshold set for each of the window areas for detection of a defective container);

a first major defect detection threshold setting means (31, 33) for setting, for each of the window areas (W1 through W5), a second fixed binarization threshold corresponding to a black level higher than the first black level inclusive (hereinafter referred to as a second black level), and a second fixed binarization threshold corresponding to a white level higher than the first white level inclusive (hereinafter referred to as a second white level);

a second major defect detection threshold setting means (37) for setting a second area threshold which is used in detecting a major-defective container and has a value larger than the first area threshold when a level of a picture element indicating a defect higher than the first black level is equal to the second black level, or a level of a picture element indicating a defect higher than the first white level is equal to the second white level; and

a major-defect-detecting means (25) for externally outputting a major defect detection signal indicating that the cylindrical container is defective when the sum of the numbers of the picture elements indicating black defects and white defects for each of said window areas exceeds the second area threshold set for a present window area.

6. The cylindrical container inner surface tester according to Claim 5, wherein
an amount of hardware can be reduced by setting the first black level as being equal to the second black level, the first white level as being equal to the second white level, or the first area threshold as being equal to the second area threshold.

7. A cylindrical container inner surface tester for detecting a major-defective container as well as a minor-defective container by irradiating an inner surface of an axis-symmetrical cylindrical container (1) using a ring-shaped illuminator (2) concentric with the cylindrical container, capturing an irradiated surface of the container (1) in an axis direction, and analyzing a captured concentric image, said tester comprising:
memory means (11, 12) for storing as captured image data (1') a multi-value continuous tone image signal (PO) obtained by A/D-converting continuous tone image signals obtained through capturing and scanning processes;

window generating means (13, 14) for dividing an image area on the inner surface of the cylindrical container into a plurality of window areas (W1 through W5);

a minor-defect-detecting means (24) for setting, for each of the window areas, a predetermined first difference binarization threshold (hereinafter referred to as a first difference level) used in detecting a picture element indicating a defect, obtaining a number of picture elements indicating a defect for each of the window areas by converting to binary data with the first difference level set for the present window area an absolute number of a difference obtained by subtracting a value of a target picture element in the screen scanning line where a multi-value continuous tone image signal (23a) read by scanning said memory means 11 is located from a value of a background picture element a predetermined number set for the present window area forward or backward of the target picture element, and determining whether or not the present container is defective depending on whether the number of picture elements indicating the defect exceeds a first area threshold set for the present window area and used in detecting a defective container;

a first major defect difference threshold setting means (CPU, 44) for setting for each of the window areas a predetermined second difference binarization threshold (hereinafter referred to as a second difference level) corresponding to an intensity difference larger than the first difference level inclusive;

a second major defect difference threshold setting means (CPU, 46) for setting a second area threshold used in detecting a major-defective container having a value larger than the first area threshold when the first difference level is equal to the second difference level; and

a major-defect-detecting means (25) for externally outputting a major defect detection signal (HDF) indicating that the present cylindrical container has a major defect when a number of picture elements indicating a defect for each of the window areas in which the binary level is a second difference level exceeds a second area threshold set for the present window.

8. The cylindrical container inner surface tester according to Claim 7, wherein
an amount of hardware can be reduced by setting said first difference level as being equal to said second difference level, or said first area threshold as being equal to said second area threshold.

9. The cylindrical container inner surface tester according to Claims 5, 6, 7, and 8 wherein
   a production line of containers can be automatically stopped according to said major defect detection signal.

10. The cylindrical container inner surface tester according to Claims 5, 6, 7, 8 and 9 wherein
    when said major defect detection signal is outputted, name of said window area associated with the major defect detection signal is displayed on a screen used when the tester is inspected and monitored.

Fig. 1A

1' CONTAINER

3 OPENING
HIGHLIGHTED
PORTION

4
BOTTOM
HIGHLIGHTED
PORTION

2 RING-SHAPED
ILLUMINATOR

Fig. 1B

3

1

4

Fig. 2A

Fig. 2B

Q ——— Q1

W1 W2 W3 W4 W5 W4 W3 W2 W1

WINDOW

5: CONCAVITY

1

Fig. 2C

Fig. 3

EP 0 610 956 A2

TEST AREA
CONTINUOUS TONE
IMAGE SIGNAL 23a

32
COMPARATOR

31
MAJOR-BLACK-
DEFECT-DETECTING
BINARIZATION
THRESHOLD
SETTING PORT

35

36
COUNTER

38
COMPARATOR

37
MAJOR DEFECT
AREA THRESHOLD
SETTING PORT

HDF
MAJOR DEFECT
DETECTION SIGNAL

34
COMPARATOR

33
MAJOR-WHITE-
DEFECT-DETECTING
BINARIZATION
THRESHOLD
SETTING PORT

Fig. 4

EP 0 610 956 A2

EP 0 610 956 A2

23a → | INVERSION CIRCUIT | 30 → | COMPARATOR | 32 ← | MAJOR-BLACK-DEFECT-DETECTING BINARIZATION THRESHOLD SETTING PORT | 31

| COUNTER | 36 → | COMPARATOR | 38 ← | MAJOR DEFECT AREA THRESHOLD SETTING PORT | 37

HDF →

Fig. 5

Fig. 6

EP 0 610 956 A2

Fig. 7

EP 0 610 956 A2

Fig. 8

EP 0 610 956 A2

Fig. 9

92 RING-SHAPED
ILLUMINATOR

93 LIGHT
DISPERSING
PLATE

94 CAMERA

91 CONTAINOR

Fig. 10

95

95-1

95-3

95-2

Fig. 11